# EUROPEAN PATENT SPECIFICATION

(11) **EP 3 462 320 B1**
(45) Date of publication and mention of the grant of the patent: **29.11.2023**
(21) Application number: 18190063.0
(22) Date of filing: 21.08.2018
(51) Int. Cl.: G06F 12/02, G06F 12/084

(54) **DYNAMIC PAGE ALLOCATION IN MEMORY**
DYNAMISCHEN SEITENZUWEISUNG IN EINEM SPEICHER
AFFECTATION DYNAMIQUE DE PAGES DANS UNE MÉMOIRE

(30) Priority: 27.09.2017 US 201715717825
(43) Date of publication of application: 03.04.2019
(73) Proprietor: INTEL Corporation, Santa Clara, CA 95054 (US)
(72) Inventor: KUMAR, Karthik, Chandler, AZ 85249 (US); GRANIELLO, Benjamin A., Chandler, AZ 85249 (US)
(74) Representative: Rummler, Felix

(56) References cited:
- EP-A1- 3 040 868
- CN-A- 106 776 365
- US-A1- 2015 067 265
- Lei Liu ET AL: "Memos: Revisiting Hybrid Memory Management in Modern Operating System", , 22 March 2017 (2017-03-22), XP055550931, Retrieved from the Internet: URL:https://pdfs.semanticscholar.org/ea38/ 618a79c3295ee03594de1a347907389db48f.pdf [retrieved on 2019-02-04]

## Description

### FIELD

The invention relates to dynamic page allocation in memory.

### BACKGROUND

Memory devices are typically provided as internal, semiconductor, integrated circuits in computers or other electronic devices. There are many different types of memory, including volatile memory, such as dynamic random-access memory (DRAM) and synchronous dynamic random-access memory (SDRAM), for example, and non-volatile memory (NVM), such as flash memory, for example.

Flash memory devices typically use a one-transistor memory cell that allows for high memory densities, high reliability, and low power consumption. Changes in threshold voltage of the cells, through programming of a charge storage node (e.g., a floating gate or charge trap) determine the data state of each cell. Other NVMs such as phase change memory (PCM) use other physical phenomena such as a physical material change or polarization to determine the data state of each cell. Common uses for flash and other solid state memories include personal computers, personal digital assistants (PDAs), digital cameras, digital media players, digital recorders, games, appliances, vehicles, wireless devices, cellular telephones, and removable portable memory modules among others. The uses for such memory continue to expand. Lei Liu ET AL: "Memos: Revisiting Hybrid Memory Management in Modern Operating System"" 22 March 2017 (2017-03-22), XP055550931,Retrieved from the Internet:URL:https://pdfs.semanticscholar.org/ ea38/618a79c3295ee03594de1a347907389db48f.pdf [retrieved on 2019-02-04] discloses a memory management framework in OS that can dynamically optimize the data placement at the memory hierarchy in terms of the on-line memory patterns, current resource utilization and feature of memory medium.

### SUMMARY OF INVENTION

The invention is defined by the appended independent claims. Advantageous, optional features of the invention are then set out in the appended dependent claims.

### BRIEF DESCRIPTION OF THE DRAWINGS

Features and advantages of invention embodiments will be apparent from the detailed description which follows, taken in conjunction with the accompanying drawings, which together illustrate, by way of example, invention features; and, wherein:
FIG. 1 illustrates a memory address access pattern that maps to locations in a memory side cache in accordance with an example embodiment;
FIG. 2 illustrates an operating system (OS) page free list in accordance with an example embodiment;
FIG. 3 illustrates a computing device that includes a cache monitoring unit that provides feedback to an operating system (OS) page allocator to enable the OS page allocator to dynamically adjust a page allocation policy in accordance with an example embodiment;
FIG. 4 illustrates a system operable to allocate physical pages of memory in accordance with an example embodiment;
FIG. 5 illustrates a memory device operable to allocate physical pages of memory in accordance with an example embodiment;
FIG. 6 is a flowchart illustrating operations for allocating physical pages of memory in accordance with an example embodiment; and
FIG. 7 illustrates a computing system that includes a data storage device in accordance with an example embodiment.

Reference will now be made to the exemplary embodiments illustrated, and specific language will be used herein to describe the same.

### DESCRIPTION OF EMBODIMENTS

Before the disclosed invention embodiments are described, it is to be understood that this disclosure is not limited to the particular structures, process steps, or materials disclosed herein, but is extended to equivalents thereof as would be recognized by those ordinarily skilled in the relevant arts. It should also be understood that terminology employed herein is used for the purpose of describing particular examples or embodiments only and is not intended to be limiting. The same reference numerals in different drawings represent the same element. Numbers provided in flow charts and processes are provided for clarity in illustrating steps and operations and do not necessarily indicate a particular order or sequence.

Reference throughout this specification to "an example" means that a particular feature, structure, or characteristic described in connection with the example is included in at least one embodiment of the present invention. Thus, appearances of the phrases "in an example" or "an embodiment" in various places throughout this specification are not necessarily all referring to the same embodiment.

As used herein, a plurality of items, structural elements, compositional elements, and/or materials can be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention can be referred to herein along with alternatives for the various components thereof. It is understood that such embodiments, examples, and alternatives are not to be construed as defacto equivalents of one another, but are to be considered as separate and autonomous representations under the present disclosure.

Furthermore, the described features, structures, or characteristics can be combined in any suitable manner in one or more embodiments. In the following description, numerous specific details are provided, such as examples of layouts, distances, network examples, etc., to provide a thorough understanding of invention embodiments. One skilled in the relevant art will recognize, however, that the technology can be practiced without one or more of the specific details, or with other methods, components, layouts, etc. In other instances, well-known structures, materials, or operations may not be shown or described in detail to avoid obscuring aspects of the disclosure.

In this disclosure, "comprises," "comprising," "containing" and "having" and the like can have the meaning ascribed to them and can mean "includes," "including," and the like, and are generally interpreted to be open ended terms. The terms "consisting of" or "consists of" are closed terms, and include only the components, structures, steps, or the like specifically listed in conjunction with such terms. "Consisting essentially of" or "consists essentially of" have the meaning generally ascribed to them. In particular, such terms are generally closed terms, with the exception of allowing inclusion of additional items, materials, components, steps, or elements, that do not materially affect the basic and novel characteristics or function of the item(s) used in connection therewith. For example, trace elements present in a composition, but not affecting the compositions nature or characteristics would be permissible if present under the "consisting essentially of" language, even though not expressly recited in a list of items following such terminology. When using an open ended term in this specification, like "comprising" or "including," it is understood that direct support should be afforded also to "consisting essentially of" language as well as "consisting of" language as if stated explicitly and vice versa.

The terms "first," "second," "third," "fourth," and the like in the description and in the claims, if any, are used for distinguishing between similar elements and not necessarily for describing a particular sequential or chronological order. It is to be understood that any terms so used are interchangeable under appropriate circumstances such that the embodiments described herein are, for example, capable of operation in sequences other than those illustrated or otherwise described herein. Similarly, if a method is described herein as comprising a series of steps, the order of such steps as presented herein is not necessarily the only order in which such steps may be performed, and certain of the stated steps may possibly be omitted and/or certain other steps not described herein may possibly be added to the method.

As used herein, comparative terms such as "increased," "decreased," "better," "worse," "higher," "lower," "enhanced," and the like refer to a property of a device, component, or activity that is measurably different from other devices, components, or activities in a surrounding or adjacent area, in a single device or in multiple comparable devices, in a group or class, in multiple groups or classes, or as compared to the known state of the art. For example, a data region that has an "increased" risk of corruption can refer to a region of a memory device which is more likely to have write errors to it than other regions in the same memory device. A number of factors can cause such increased risk, including location, fabrication process, number of program pulses applied to the region, etc.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result. For example, a composition that is "substantially free of" particles would either completely lack particles, or so nearly completely lack particles that the effect would be the same as if it completely lacked particles. In other words, a composition that is "substantially free of" an ingredient or element may still actually contain such item as long as there is no measurable effect thereof.

As used herein, the term "about" is used to provide flexibility to a numerical range endpoint by providing that a given value may be "a little above" or "a little below" the endpoint. However, it is to be understood that even when the term "about" is used in the present specification in connection with a specific numerical value, that support for the exact numerical value recited apart from the "about" terminology is also provided.

Numerical amounts and data may be expressed or presented herein in a range format. It is to be understood that such a range format is used merely for convenience and brevity and thus should be interpreted flexibly to include not only the numerical values explicitly recited as the limits of the range, but also to include all the individual numerical values or sub-ranges encompassed within that range as if each numerical value and sub-range is explicitly recited. As an illustration, a numerical range of "about 1 to about 5" should be interpreted to include not only the explicitly recited values of about 1 to about 5, but also include individual values and sub-ranges within the indicated range. Thus, included in this numerical range are individual values such as 2, 3, and 4 and sub-ranges such as from 1-3, from 2-4, and from 3-5, etc., as well as 1, 1.5, 2, 2.3, 3, 3.8, 4, 4.6, 5, and 5.1 individually.

This same principle applies to ranges reciting only one numerical value as a minimum or a maximum. Furthermore, such an interpretation should apply regardless of the breadth of the range or the characteristics being described.

An initial overview of technology embodiments is provided below and then specific technology embodiments are described in further detail later. This initial summary is intended to aid readers in understanding the technology more quickly, but is not intended to identify key or essential technological features nor is it intended to limit the scope of the claimed subject matter. Unless defined otherwise, all technical and scientific terms used herein have the same meaning as commonly understood by one of ordinary skill in the art to which this disclosure belongs.

A memory device can utilize non-volatile memory (NVM), which is a storage medium that does not require power to maintain the state of data stored by the medium. NVM has traditionally been used for the task of memory storage, or long-term persistent storage, but new and evolving memory technologies allow the use of NVM in roles that extend beyond traditional memory storage. One example of such a role is the use of NVM as main or system memory. Non-volatile system memory (NVMsys) can combine data reliability of traditional storage with ultra-low latency and high bandwidth performance, having many advantages over traditional volatile memory, such as high density, large capacity, lower power consumption, and reduced manufacturing complexity, to name a few. Byte-addressable, write-in-place NVM such as three-dimensional (3D) cross-point memory, for example, can operate as byte-addressable memory similar to dynamic random-access memory (DRAM) or as block-addressable memory similar to NAND flash. In other words, such NVM can operate as system memory or as persistent storage memory (NVMstor). In some situations where NVM is functioning as system memory, stored data can be discarded or otherwise rendered unreadable when power to the NVMsys is interrupted. NVMsys also allows increased flexibility in data management by providing non-volatile, low-latency memory that can be located closer to a processor in a computing device. In some examples, NVMsys can reside on a DRAM bus, such that the NVMsys can provide ultra-fast DRAM-like access to data. NVMsys can also be useful in computing environments that frequently access large, complex data sets, and environments that are sensitive to downtime caused by power failures or system crashes.

Non-limiting examples of NVM can include planar or three-dimensional (3D) NAND flash memory, including single or multi-threshold-level NAND flash memory, NOR flash memory, single or multi-level Phase Change Memory (PCM), such as chalcogenide glass PCM, planar or 3D PCM, cross-point array memory, including 3D cross-point memory, non-volatile dual in-line memory module (NVDIMM)-based memory, such as flash-based (NVDIMM-F) memory, flash/DRAM-based (NVDIMM-N) memory, persistent memory-based (NVDIMM-P) memory, 3D cross-point-based NVDIMM memory, resistive RAM (ReRAM), including metal-oxide- or oxygen vacancy-based ReRAM, such as HfO₂-, Hf/HfOₓ-, Ti/HfO₂-, TiOₓ-, and TaOₓ-based ReRAM, filament-based ReRAM, such as Ag/GeS₂-, ZrTe/Al₂O₃-, and Ag-based ReRAM, programmable metallization cell (PMC) memory, such as conductive-bridging RAM (CBRAM), silicon-oxide-nitride-oxide-silicon (SONOS) memory, ferroelectric RAM (FeRAM), ferroelectric transistor RAM (Fe-TRAM), anti-ferroelectric memory, polymer memory (e.g., ferroelectric polymer memory), magnetoresistive RAM (MRAM), write-in-place non-volatile MRAM (NVMRAM), spin-transfer torque (STT) memory, spin-orbit torque (SOT) memory, nanowire memory, electrically erasable programmable read-only memory (EEPROM), nanotube RAM (NRAM), other memristor- and thyristor-based memory, spintronic magnetic junction-based memory, magnetic tunneling junction (MTJ)-based memory, domain wall (DW)-based memory, and the like, including combinations thereof. The term "memory device" can refer to the die itself and/or to a packaged memory product. NVM can be byte or block addressable. In some examples, NVM can comply with one or more standards promulgated by the Joint Electron Device Engineering Council (JEDEC), such as JESD21-C, JESD218, JESD219, JESD220-1, JESD223B, JESD223-1, or other suitable standard (the JEDEC standards cited herein are available at www.jedec.org). In one specific example, the NVM can be 3D cross-point memory.

In one example, with the advent of NVMsys, memory side caches have emerged as a beneficial type of caching in memory systems. A memory side cache can be distinct from a central processing unit (CPU) side cache, in that the memory side cache is caching data for system memory, or in other words, is caching data referenced to a memory tier below the memory side cache, as opposed to the CPU side cache, which is caching for the CPU that is referenced to the CPU. A memory side cache can provide fast data access, and as such can be direct-mapped to achieve faster lookup and retrieval of data stored therein. In addition, a memory side cache can span tens to hundreds of gigabytes (GB) in capacity, which is typically capable of caching around 1/8^{th} or 1/16^{th} of the capacity of the NVMsys in the lower memory tier. The memory side cache can include any type of volatile memory that can be used as cache. The volatile memory can include any type of volatile memory, and is not considered to be limiting. Nonlimiting examples of volatile memory can include random access memory (RAM), such as static random-access memory (SRAM), dynamic random-access memory (DRAM), synchronous dynamic random-access memory (SDRAM), and the like, including combinations thereof. SDRAM memory can include any variant thereof, such as single data rate SDRAM (SDR DRAM), double data rate (DDR) SDRAM, including DDR, DDR2, DDR3, DDR4, DDR5, and so on, described collectively as DDRx, and low power DDR (LPDDR) SDRAM, including LPDDR, LPDDR2, LPDDR3, LPDDR4, and so on, described collectively as LPDDRx. In some examples, DRAM complies with a standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209B for LPDDR SDRAM, JESD209-2F for LPDDR2 SDRAM, JESD209-3C for LPDDR3 SDRAM, and JESD209-4A for LPDDR4 SDRAM (these standards are available at www.jedec.org; DDR5 SDRAM is forthcoming). Such standards (and similar standards) may be referred to as DDR-based or LPDDR-based standards, and communication interfaces that implement such standards may be referred to as DDR-based or LPDDR-based interfaces. In one specific example, the volatile memory can be DRAM. In another specific example, the volatile memory can be DDRx SDRAM. In yet another specific aspect, the volatile memory can be LPDDRx SDRAM. Additionally, in some cases the volatile memory can be functionally coupled to a memory card, such as a dual in-line memory module (DIMM), for example, which is coupled into the system to function as a memory side cache.

In one example, the increased capacity of memory side caches is a new change to the memory hierarchy in memory devices. The capacities of memory side caches are large enough that entire datasets can reside therein. However, due to the direct mapped nature of the memory side cache, a workload may utilize only a small portion of available capacity in the memory side cache. For example, based on a particular access pattern of the workload, only the small portion of the available capacity can be utilized due to conflicts in the memory side cache. Accessing memory locations in the memory side cache in accordance with a certain memory access pattern can result in folding over to a small set of memory locations in the direct-mapped memory side cache. In other words, several of the physical memory addresses can map to the same memory locations in the memory side cache, which can result in inefficient usage and an increased number of conflicts in the memory side cache.

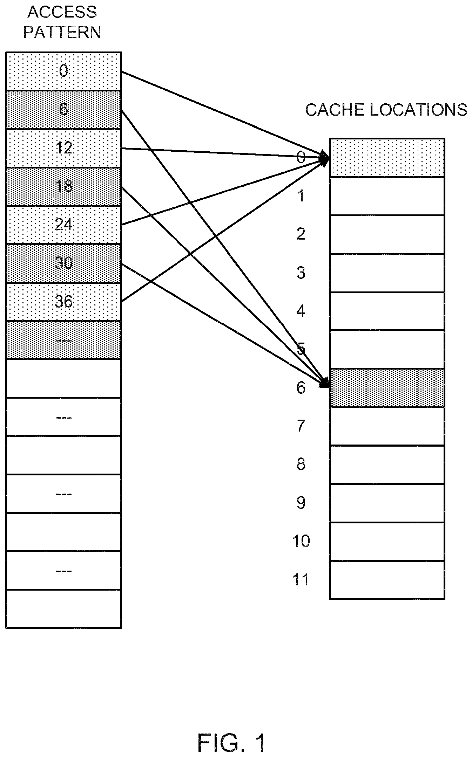

FIG. 1 illustrates an example of a traditional memory address access pattern that maps to memory locations in a memory side cache. As shown, the memory address access pattern can fold over to a small set of memory locations in the memory side cache, which can be a direct-mapped memory side cache. In this example, the memory address access pattern maps to only two locations in the memory side cache out of all available locations, thereby resulting in inefficient usage of the available cache space and an increased number of conflicts (i.e., at the two locations).

In one configuration, an operating system (OS) page allocator can allocate physical pages in memory for a workload, and a memory address access pattern of the workload can be a function of the physical pages allocated in the memory to the workload by the OS page allocator. The physical pages in memory can be associated with memory addresses, and the memory address access pattern can be a function of the physical pages in the memory. As an example, physical pages X1, Y1 and Z1 can have addresses 100, 200 and 300, respectively, and these addresses can be accessed in accordance with a memory address access pattern.

In one example, while a span of 4 kilobytes (K) (i.e., a lower 12 bits within a page) can be accessed as a function of the workload itself, the 4K is an upper bound that is controlled by the workload. The higher order bits (e.g., 13 and above) of a physical address can be determined by the OS page allocator. For example, a workload that is streaming sequentially in a virtual address space can be given random physical pages that are not contiguous, which can result in a non-streaming physical address access pattern in memory (outside of 4K chunks). On the other hand, a workload with somewhat arbitrary access patterns can inadvertently be forced to conflict over a reduced set of locations in a direct-mapped cache by the OS page allocator, which can be advantageous for a noncritical application in a shared environment but disadvantageous for a critical application.

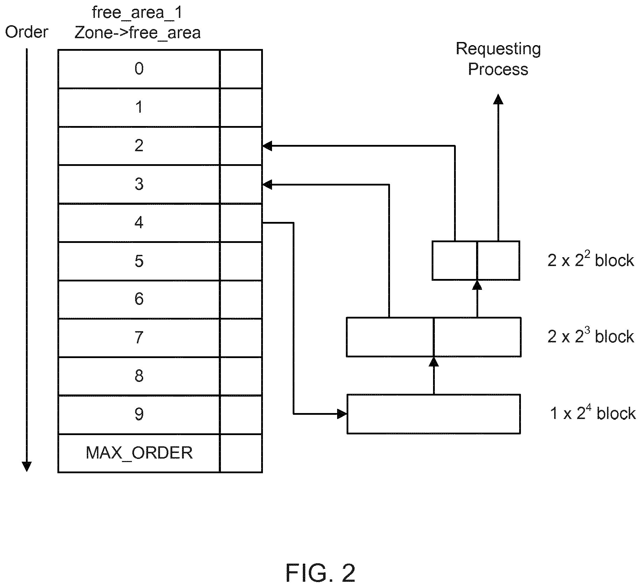

FIG. 2 illustrates an example of an operating system (OS) page free list. As shown, OS page free lists can often fold around a power of two, which can result in an increased number of conflicts to a few entries in a direct-mapped cache. This problem can be found in multi-channel dynamic random-access memory (MCDRAM) caches and two-level memory (2LM) caches, which can result in poor application level performance. Over a period of time, the OS page free list can shrink or become unordered or scrambled, and pages that are handed out can become more inefficient. Over time, the pages that are handed out are more likely to conflict with existing pages that are currently handed out, and in previous solutions, there was no mechanism for determining the most efficient page to hand out from the OS page free list that would avoid conflicts.

In one configuration, the OS page allocator can apply page allocation patterns and policies, which can be useful in determining effectiveness and usage of the memory side cache. The application of the page allocation patterns and policies can be a control mechanism that is independent of an application. However, in previous solutions, the OS page allocator was decoupled from both static and dynamic behavior of the memory side cache. In previous solutions, the OS page allocator had no mechanism to adjust the free list/page allocation policies based on feedback or specifications. In addition, in previous solutions, when folding to a small set of memory locations in a direct-mapped memory side cache occurred, the solution was to statically configure a random page allocation policy, but this solution was ineffective in reducing the folding to the small set of memory locations.

In the present technology, the OS page allocator in a system can receive system level or per process guidance from applications, or feedback from a memory side cache monitoring unit associated with a memory side cache, and the guidance and/or feedback can enable the OS page allocator to dynamically modulate page allocation patterns and policies. For example, the OS page allocator can receive hints and feedback from the memory side cache monitoring unit regarding memory address folding, memory side cache usage, memory population in the system, a size and interleaving scheme of the memory side cache, a memory access pattern of applications, etc. Based on the hints and feedback received from the memory side cache monitoring unit, the OS page allocator can appropriately adjust its page allocation patterns and policies. In other words, the OS page allocator can implement a dynamic scheme for modifying the page allocation patterns and policies based on the hints and feedback received from the memory side cache monitoring unit, which can reduce the likelihood of folding to a small set of memory locations in a direct-mapped memory side cache. Therefore, the memory side cache monitoring unit can coordinate usage of the memory side cache with physical page allocation, which can improve application performance and the usage and effectiveness of the memory side cache.

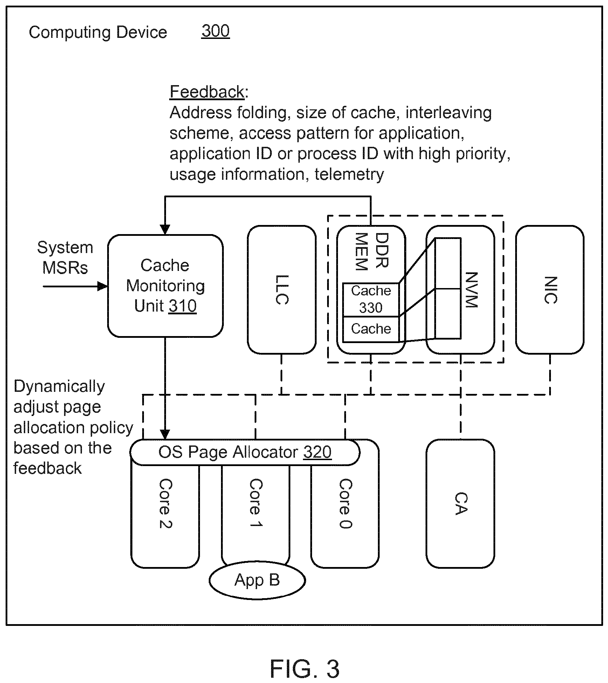

FIG. 3 illustrates an exemplary computing device 300. The computing device 300 can include a network interface controller (NIC) that enables communication between nodes in the computing device 300. The computing device 300 can include one or more cores or processors, such as Core 0, Core 1 and Core 2, for example. An application (e.g., App B) can be executed using the one or more cores or processors in the computing device 300. The computing device 300 may include a caching agent (CA) and a last-level cache (LLC). The caching agent can process memory data requests from the cores in the computing device 300. The computing device 300 can include NVM and DDRx memory. The DDRx memory can include a cache 330, such as a memory side cache. The cache 330 can utilize direct mapping to store data to provide fast access to the cached data. However, as described earlier, the direct mapping can cause folding over to a small set of memory locations in the direct-mapped cache 330, which can lead to only a small portion of available capacity in the cache 330 being utilized due to memory address conflicts in the cache 330.

According to the invention, the computing device 300 includes a cache monitoring unit 310 that is communicatively coupled to the cache 330 in the computing device 300. The cache monitoring unit 310 is a memory side cache monitoring unit that monitors the cache 330 (e.g., the memory side cache). The cache monitoring unit 310 can also be referred to as an intelligent eviction allocation module, which can be a hardware unit in the computing device 300. The cache monitoring unit 310 is configured to monitor usage and activity in the cache 330, and based on this monitoring, the cache monitoring unit 310 can identify or receive feedback from the cache 330. The cache monitoring unit 310 forwards the feedback to an operating system (OS) page allocator 320 in the computing device 300. The OS page allocator 320 is configured to dynamically adjust a page allocation pattern or policy for the system (e.g., the cache 330 and/or the NVM) based on the feedback received from the cache monitoring unit 310. In other words, the OS page allocator 320 is configured to adjust the page allocation pattern or policy that defines physical pages allocated by the OS page allocator 320 based on the feedback received from the cache monitoring unit 310.

According to the invention, the OS page allocator 320 is configured to dynamically change the page allocation pattern to obtain an improved memory address access pattern with a reduced number of address conflicts. The adjustment to the page allocation policy is configured to prevent folding to a reduced set of locations in the cache 330. The physical pages can have addresses, and the page allocation policy can determine which physical pages (or addresses) are to be used. As an example, physical pages X1, Y1, Z1 can have addresses 100, 200, 300, and these addresses can fold in a cache with 100 addresses (e.g., 100 mod 100 is equal to 200 mod 100, which is equal to 300 mod 100). In this example, feedback regarding the memory address folding can be provided to the OS page allocator 320, and then the OS page allocator 320 can allocate a new set of physical pages. For example, the OS page allocator 320 can allocate pages X2, Y2 and Z2 with addresses 120, 140 and 160. With the new set of physical pages, these addresses do not fold as 120 mod 100 is not equal to 140 mod 100, etc. Therefore, the OS page allocator 320 can allocate a different set of physical pages, which can target a different set of physical addresses in memory (e.g., the cache 330 and/or the NVM), thereby leading to reduced folding and reduced memory address conflicts in the memory. As a result, an increased portion of the cache 330 can be successfully utilized to store data.

According to the invention, the OS page allocator 320 is configured to adjust the page allocation pattern or policy to modify a memory address access pattern for the cache 330, which reduces folding to a reduced set of memory addresses in the memory of the computing device 300 (e.g., the cache 330 and/or the NVM). In other words, adjusting the page allocation pattern or policy can modify the physical pages allocated by the OS page allocator 320, and the adjustment to the page allocation pattern or policy can serve to modify the memory address access pattern. The physical pages can be associated with memory addresses, and the memory address access pattern can be a function of the physical pages allocated by the OS page allocator 320. In addition, based on the reduced folding in the memory, there can be a reduced number of memory address conflicts in the memory of the computing device 300.

According to the invention, the cache monitoring unit 310 is configured to identify feedback from the cache 330 that includes memory address folding information. The memory address folding information can identify a memory address range in the cache 330 and/or the NVM that is associated with an increased amount of memory address folding and certain address ranges in the cache 330 that are associated with an increased number of memory address conflicts. The cache monitoring unit 310 is configured to provide the address folding information (that includes the problematic memory address ranges) to the OS page allocator 320. The OS page allocator 320 is configured to adjust the page allocation policy to allocate physical pages that avoid the memory address ranges that are associated with the increased amount of memory address folding and the increased number of memory address conflicts. For example, the OS page allocator 320 can allocate or hand out pages from a different region in the cache 330. In other words, the OS page allocator 320 can avoid the regions in the cache 330 that are more problematic (i.e., have increased folding and conflicts).

In another example, the feedback identified at the cache monitoring unit 310 can include cache miss information. Based on the cache miss information, the cache monitoring unit 310 can identify certain address bits that are causing the increased amount of memory address folding and memory address conflicts in the cache 330. In other words, the cache monitoring unit 310 can identify problem address bits (e.g., 3 bits in memory addresses of a memory address range that are conflicting), which are leading to the increased amount of memory address folding and memory address conflicts. The cache monitoring unit 310 can incorporate this information into the feedback, and then provide the feedback to the OS page allocator 320. Based on the feedback, the OS page allocator 320 can identify particular address bits that are causing the increased amount of memory address folding and memory address conflicts. The OS page allocator 320 can shuffle, hash, or randomize these address bits within an address field, and then allocate or hand out the physical pages in the cache 330 and/or the NVM based on these different address bits. In other words, by modifying the address bits, the OS page allocator 320 can allocate or hand out physical pages from a different region in the cache 330 and/or the NVM, thereby avoiding regions in the cache 330 and/or the NVM that are more problematic (i.e., have increased folding and conflicts).

In one example, a basic input output system (BIOS) can be modified to interleave memory addresses, such that a combination of higher order bits and lower order bits can be used to determine a cache-to-far-memory map distribution, and these bits can be exposed to the OS page allocator 320 that allocates the physically addressed pages.

In one example, the cache monitoring unit 310 can observe that passing feedback to the OS page allocator 310 is not improving cache behavior in terms of memory addressing folding and conflicts. In this case, the cache monitoring unit 310 can determine to modify properties of the cache 330, such as the associativity of the cache 330, in order to improve the cache behavior.

In one example, the feedback identified at the cache monitoring unit 310 can include an indication of a size of the cache 330, an interleaving scheme for the cache 330, a memory address access pattern for an application that utilizes data stored in the cache 330, an application identifier (ID) or a process ID that is associated with an increased priority level, usage information for the cache 330, and/or real-time telemetry information. In addition, the cache monitoring unit 310 can identify system model-specific registers (MSRs), which can specify specific types of feedback to be provided to the OS page allocator 320. In other words, the system MSRs can provide a certain level of system configurability for the feedback that is provided to the OS page allocator 320. The cache monitoring unit 310 can provide the feedback (e.g., size of cache 330, interleaving scheme, memory address access pattern for an application, application ID, process ID, usage information, telemetry data, etc.) to the OS page allocator 320, and the OS page allocator 320 can adjust the page allocation policy that defines the physical pages allocated by the OS page allocator 320 based on the feedback.

In one example, the OS page allocator 320 can have several pools of resources available in memory (e.g., the cache 330 and/or the NVM), as well as page allocation policies based on these pools of resources. Based on input from the cache monitoring unit 310, the OS page allocator 320 can adjust the page allocation policy to be one of, for example, a random page allocation policy, a large-page allocation policy, a range page allocation policy, or the like. Based on the random page allocation policy, the OS page allocator 320 can allocate physical pages in a semi-random manner to maximize spread. Based on the large-page allocation policy, the OS page allocator 320 can allocate physical pages of increased size (e.g., in the range of megabytes (MBs) or gigabytes (GBs) instead of 4 kilobytes (KB)) with XYZ bits folding. Based on the range page allocation policy, the OS page allocator 320 can allocate physical pages with physical addresses within a certain range. Alternatively, the OS page allocator 320 can adjust the page allocation policy in accordance with a different mechanism.

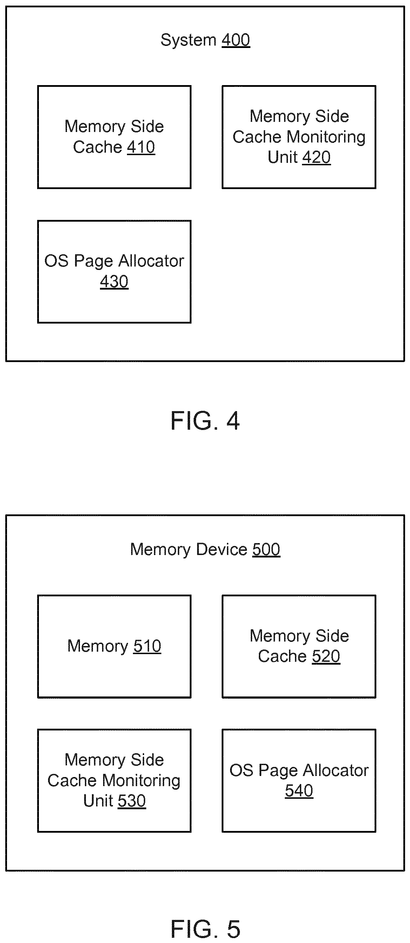

FIG. 4 illustrates a system 400 operable to allocate physical pages of memory. The system 400 includes a memory side cache 410. The system 400 includes a memory side cache monitoring unit 420 coupled to the memory side cache 410. The system 400 includes an operating system (OS) page allocator 430. The OS page allocator 430 is configured to receive feedback from the memory side cache monitoring unit 420. The OS page allocator 430 is configured to adjust a page allocation policy that defines the physical pages allocated by the OS page allocator 430 based on the feedback received from the memory side cache monitoring unit 420.

FIG. 5 illustrates a memory device 500 operable to allocate physical pages of memory 510. The memory device 500 includes memory 510. The memory device 500 includes a memory side cache 520. The memory device 500 includes a memory side cache monitoring unit 530 coupled to the memory side cache 520. The memory device 500 includes an operating system (OS) page allocator 540. The OS page allocator 540 is configured to receive feedback from the memory side cache monitoring unit 530. The OS page allocator 540 is configured to adjust a page allocation policy that defines the physical pages allocated by the OS page allocator 540 based on the feedback received from the memory side cache monitoring unit 530.

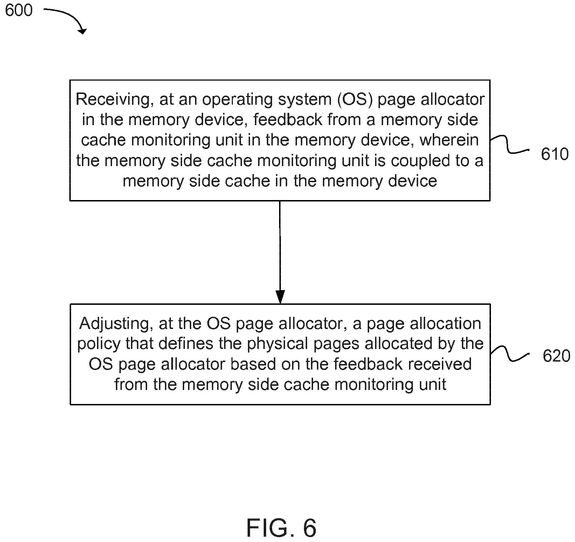

According to the invention, there is provided a method 600 for allocating physical pages of memory, as shown in the flow chart in FIG. 6. The method can be executed as instructions on a machine, where the instructions are included on at least one computer readable medium or one non-transitory machine-readable storage medium. The method includes the operation of receiving, at an operating system (OS) page allocator in the memory device, feedback from a memory side cache monitoring unit in the memory device, wherein the memory side cache monitoring unit is coupled to a memory side cache in the memory device, as in block 610. The method further includes the operation of adjusting, at the OS page allocator, a page allocation policy that defines the physical pages allocated by the OS page allocator based on the feedback received from the memory side cache monitoring unit, as in block 620.

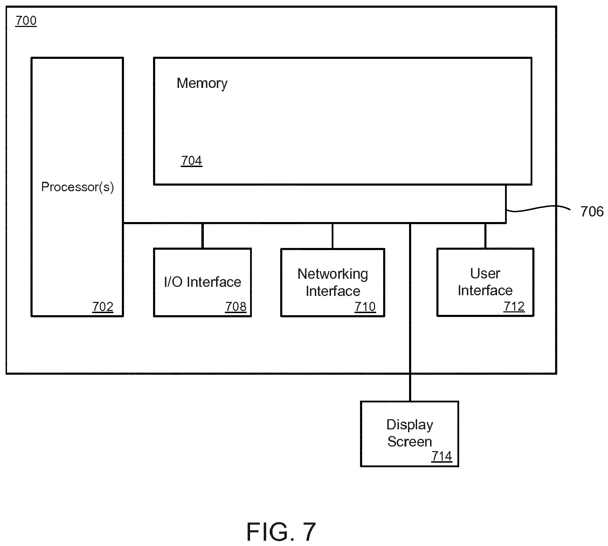

FIG. 7 illustrates a general computing system or device 700 that can be employed in the present technology. The computing system 700 can include a processor 702 in communication with a memory 704. The memory 704 can include any device, combination of devices, circuitry, and the like that is capable of storing, accessing, organizing, and/or retrieving data. Non-limiting examples include SANs (Storage Area Network), cloud storage networks, volatile or non-volatile RAM, phase change memory, optical media, hard-drive type media, and the like, including combinations thereof.

The computing system or device 700 additionally includes a local communication interface 706 for connectivity between the various components of the system. For example, the local communication interface 706 can be a local data bus and/or any related address or control busses as may be desired.

The computing system or device 700 can also include an I/O (input/output) interface 708 for controlling the I/O functions of the system, as well as for I/O connectivity to devices outside of the computing system 700. A network interface 710 can also be included for network connectivity. The network interface 710 can control network communications both within the system and outside of the system. The network interface can include a wired interface, a wireless interface, a Bluetooth interface, optical interface, and the like, including appropriate combinations thereof. Furthermore, the computing system 700 can additionally include a user interface 712, a display device 714, as well as various other components that would be beneficial for such a system.

The processor 702 can be a single or multiple processors, and the memory 704 can be a single or multiple memories. The local communication interface 706 can be used as a pathway to facilitate communication between any of a single processor, multiple processors, a single memory, multiple memories, the various interfaces, and the like, in any useful combination.

Various techniques, or certain aspects or portions thereof, can take the form of program code (i.e., instructions) embodied in tangible media, such as floppy diskettes, CD-ROMs, hard drives, non-transitory computer readable storage medium, or any other machine-readable storage medium wherein, when the program code is loaded into and executed by a machine, such as a computer, the machine becomes an apparatus for practicing the various techniques. Circuitry can include hardware, firmware, program code, executable code, computer instructions, and/or software. A non-transitory computer readable storage medium can be a computer readable storage medium that does not include signal. In the case of program code execution on programmable computers, the computing device can include a processor, a storage medium readable by the processor (including volatile and NVM and/or storage elements), at least one input device, and at least one output device. The volatile and NVM and/or storage elements can be a RAM, EPROM, flash drive, optical drive, magnetic hard drive, solid state drive, or other medium for storing electronic data. The node and wireless device can also include a transceiver module, a counter module, a processing module, and/or a clock module or timer module. One or more programs that can implement or utilize the various techniques described herein can use an application programming interface (API), reusable controls, and the like. Such programs can be implemented in a high level procedural or object-oriented programming language to communicate with a computer system. However, the program(s) can be implemented in assembly or machine language, if desired. In any case, the language can be a compiled or interpreted language, and combined with hardware implementations. Exemplary systems or devices can include without limitation, laptop computers, tablet computers, desktop computers, smart phones, computer terminals and servers, storage databases, and other electronics which utilize circuitry and programmable memory, such as household appliances, smart televisions, digital video disc (DVD) players, heating, ventilating, and air conditioning (HVAC) controllers, light switches, and the like.

While the forgoing examples are illustrative of the principles of invention embodiments in one or more particular applications, it will be apparent to those of ordinary skill in the art that numerous modifications in form, usage and details of implementation can be made without the exercise of inventive faculty, and without departing from the principles and concepts of the disclosure.

## Claims

1. A method (600) for allocating physical pages of memory, the method comprising:
receiving (610), at an operating system, OS, page allocator (320;430;540), feedback from a memory side cache monitoring unit (310;420;530) in a memory device, wherein the memory side cache monitoring unit is coupled to a direct mapped memory side cache (330;410;520) in the memory device;
wherein the method further comprises:
receiving, at the OS page allocator, the feedback arranged to include memory address folding information which comprise: (i). information identifying at least a first memory address range in the direct mapped memory side cache associated with an increased amount of memory address folding, and (ii). information identifying at least a second memory address range in the direct mapped memory side cache associated with an increased number of memory address conflicts,
wherein memory address folding occurs when a plurality of the physical memory addresses accessed based on a certain access pattern of a certain workload are mapped to the same memory location in the direct mapped memory side cache;
adjusting (620), at the OS page allocator, a page allocation policy that defines the physical pages allocated by the OS page allocator, wherein the adjusting includes allocating physical pages that avoid the first memory address range and the second memory address range.

2. The method of claim 1, further comprising adjusting the page allocation policy to modify a memory address access pattern for the direct mapped memory side cache.

3. The method of claim 2, wherein the physical pages are associated with memory addresses, and the memory address access pattern is a function of the physical pages allocated by the OS page allocator.

4. The method of claim 1, wherein adjusting the page allocation policy further comprises adjusting the page allocation policy to be one of: a random page allocation policy, a large-page allocation policy or a range page allocation policy.

5. The method of claim 1, wherein the feedback received from the memory side cache monitoring unit further includes one or more of:
an indication of a size of the direct mapped memory side cache;
an interleaving scheme for the direct mapped memory side cache;
a memory address access pattern for an application that utilizes data stored in the direct mapped memory side cache;
an application identifier or a process identifier that is associated with an increased priority level;
usage information for the direct mapped memory side cache; or
real-time telemetry information.

6. A device to allocate physical pages of memory, comprising:
an operating system, OS, page allocator (320;430;540); and
a communication interface to couple the OS page allocator to a direct mapped memory side cache (330;410;520) and a memory side cache monitoring unit (310;420;530) coupled to the direct mapped memory side cache;
wherein the OS page allocator is configured to carry out the steps of the method of any one of claims 1 to 5.

7. A memory system operable to allocate physical pages of memory, comprising:
a non-volatile memory, NVM (510);
a direct mapped memory side cache (330;520) communicatively coupled to the NVM;
a memory side cache monitoring unit (310;530) communicatively coupled to the direct mapped memory side cache; and
an operating system, OS, page allocator (320;540) configured to carry out the steps of the method of any one of claims 1 to 5.

8. The system of claim 7, wherein the OS page allocator is further configured to adjust the page allocation policy to define the physical pages allocated in one or more of: the NVM or the direct mapped memory side cache.

9. The system of claim 7, wherein the NVM and the direct mapped memory side cache are located on a same dual in-line memory module, DIMM, in the memory device.

## Patentansprüche

1. Verfahren (600) zum Zuweisen von physischen Seiten eines Speichers, wobei das Verfahren umfasst: Empfangen (610), in einem Seitenzuteiler (320;430;540) eines Betriebssystems, OS-Seitenzuteiler, einer Rückmeldung von einer speicherseitigen Cache-Überwachungseinheit (310;420;530) in einer Speichervorrichtung, wobei die speicherseitige Cache-Überwachungseinheit mit einem direkt zugeordneten speicherseitigen Cache (330;410;520) in der Speichervorrichtung gekoppelt ist;
wobei das Verfahren ferner umfasst:
Empfangen, in dem OS-Seitenzuteiler, der Rückmeldung, die geeignet ist, um Informationen über eine Speicheradressenfaltung zu beinhalten, die umfassen: (i). Informationen, die mindestens einen ersten Speicheradressenbereich in dem direkt zugeordneten speicherseitigen Cache identifizieren, der mit einer erhöhten Menge an Speicheradressenfaltungen assoziiert ist, und (ii). Informationen, die mindestens einen zweiten Speicheradressenbereich in dem direkt zugeordneten speicherseitigen Cache identifizieren, der mit einer erhöhten Anzahl von Speicheradressenkonflikten assoziiert ist,
wobei eine Speicheradressenfaltung auftritt, wenn eine Vielzahl von physischen Speicheradressen, auf die aufgrund eines bestimmten Zugriffsmusters einer bestimmten Arbeitslast zugegriffen wird, dem gleichen Speicherort in dem direkt zugeordneten speicherseitigen Cache zugeordnet werden;
Anpassen (620), in dem OS-Seitenzuteiler, einer Seitenzuweisungsrichtlinie, welche die physischen Seiten definiert, die durch den OS-Seitenzuteiler zugewiesen werden, wobei das Anpassen ein Zuweisen von physischen Seiten beinhaltet, die den ersten Speicheradressenbereich und den zweiten Speicheradressenbereich vermeiden.

2. Verfahren nach Anspruch 1, das ferner ein Anpassen der Seitenzuweisungsrichtlinie umfasst, um ein Speicheradressenzugriffsmuster für den direkt zugeordneten speicherseitigen Cache zu modifizieren.

3. Verfahren nach Anspruch 2, wobei die physischen Seiten mit Speicheradressen assoziiert sind und wobei das Speicheradressenzugriffsmuster eine Funktion der physischen Seiten ist, die durch den OS-Seitenzuteiler zugewiesen werden.

4. Verfahren nach Anspruch 1, wobei das Anpassen der Seitenzuweisungsrichtlinie ferner ein Anpassen der Seitenzuweisungsrichtlinie umfasst, sodass sie eine ist von: einer Zufallsseitenzuweisungsrichtlinie, Großseitenzuweisungsrichtlinie oder einer Bereichsseitenzuweisungsrichtlinie.

5. Verfahren nach Anspruch 1, wobei die Rückmeldung, die von der speicherseitigen Cache-Überwachungseinheit empfangen wird, ferner ein oder mehrere umfasst von:
einer Anzeige der Größe des direkt zugeordneten speicherseitigen Caches;
einem Verschachtelungsschema für den direkt zugeordneten speicherseitigen Cache;
einem Speicheradressenzugriffsmuster für eine Anwendung, die Daten verwendet, die in dem direkt zugeordneten speicherseitigen Cache gespeichert sind;
einer Anwendungskennung oder eine Prozesskennung, die mit einer höheren Prioritätsebene assoziiert ist;
Nutzungsinformationen für den direkt zugeordneten speicherseitigen Cache; oder Echtzeit-Telemetrieinformationen.

6. Vorrichtung zum Zuweisen von physischen Seiten eines Speichers, umfassend:
Seitenzuteiler eines Betriebssystems, OS-Seitenzuteiler, (320;430;540); und
eine Kommunikationsschnittstelle, um den OS-Seitenzuteiler mit einem direkt zugeordneten speicherseitigen Cache (330;410;520) zu koppeln, und eine speicherseitige Cache-Überwachungseinheit (310;420;530), die mit dem direkt zugeordneten speicherseitigen Cache (330;410;520) gekoppelt ist;
wobei der OS-Seitenzuteiler konfiguriert ist zum Ausführen der Schritte des Verfahrens nach einem der Ansprüche 1 bis 5.

7. Speichersystem, das funktionsfähig ist zum Zuweisen von physischen Seiten eines Speichers, umfassend:
einen nicht-flüchtigen Speicher (Non-Volatile Memory, NVM) (510);
einen direkt zugeordneten speicherseitigen Cache (330;520), der für einen Datenaustausch mit dem NVM gekoppelt ist;
eine speicherseitige Cache-Überwachungseinheit (310;530) die für einen Datenaustausch mit dem direkt zugeordneten speicherseitigen Cache gekoppelt ist; und
einen Seitenzuteiler eines Betriebssystems, OS-Seitenzuteiler (320;540), der konfiguriert ist zum Ausführen der Schritte des Verfahrens nach einem der Ansprüche 1 bis 5.

8. System nach Anspruch 7, wobei der OS-Seitenzuteiler ferner konfiguriert ist zum Anpassen der Seitenzuweisungsrichtlinie, um die physischen Seiten zu definieren, die zugewiesen wurden in einem oder mehreren von: dem NVM oder dem direkt zugeordneten speicherseitigen Cache.

9. System nach Anspruch 7, wobei sich der NVM und der direkt zugeordnete speicherseitige Cache in dem gleichen doppelreihigen Speichermodul (Dual In-line Memory Module, DIMM) in der Speichervorrichtung befinden.

## Revendications

1. Procédé (600) pour allouer des pages physiques de mémoire, le procédé comprenant : la réception (610), au niveau d'un allocateur de pages (320 ; 430 ; 540) de système d'exploitation, OS, d'informations de rétroaction provenant d'une unité de contrôle de mémoire cache côté mémoire (310 ; 420 ; 530) dans un dispositif de mémoire, dans lequel l'unité de contrôle de mémoire cache côté mémoire est couplée à une mémoire cache côté mémoire à mappage direct (330 ; 410 ; 520) dans le dispositif de mémoire ;
dans lequel le procédé comprend en outre :
la réception, au niveau de l'allocateur de pages d'OS, des informations de rétroaction agencées pour inclure des informations de pliage d'adresse de mémoire qui comprennent : (i). des informations identifiant au moins une première plage d'adresses de mémoire dans la mémoire cache côté mémoire à mappage direct associées à une quantité accrue de pliage d'adresse de mémoire, et (ii). des informations identifiant au moins une seconde plage d'adresses de mémoire dans la mémoire cache côté mémoire à mappage direct associées à un nombre accru de conflits d'adresses de mémoire,
dans lequel un pliage d'adresse de mémoire se produit lorsqu'une pluralité des adresses de mémoire physique accédées sur la base d'un certain schéma d'accès d'une certaine charge de travail sont mappées au même emplacement de mémoire dans la mémoire cache côté mémoire à mappage direct ;
l'ajustement (620), au niveau de l'allocateur de pages d'OS, d'une politique d'allocation de pages qui définit les pages physiques allouées par l'allocateur de pages d'OS, dans lequel l'ajustement inclut l'allocation de pages physiques qui évitent la première plage d'adresses de mémoire et la seconde plage d'adresses de mémoire.

2. Procédé selon la revendication 1, comprenant en outre l'ajustement de la politique d'allocation de pages pour modifier un schéma d'accès d'adresse de mémoire pour la mémoire cache côté mémoire à mappage direct.

3. Procédé selon la revendication 2, dans lequel les pages physiques sont associées à des adresses de mémoire, et le schéma d'accès d'adresse de mémoire dépend des pages physiques allouées par l'allocateur de pages d'OS.

4. Procédé selon la revendication 1, dans lequel l'ajustement de la politique d'allocation de pages comprend en outre l'ajustement de la politique d'allocation de pages comme étant l'une de : une politique d'allocation de pages aléatoire, une politique d'allocation de pages par taille ou une politique d'allocation de pages par plage.

5. Procédé selon la revendication 1, dans lequel les informations de rétroaction reçues de l'unité de contrôle de mémoire cache côté mémoire incluent en outre l'un ou plusieurs de :
une indication d'une taille de la mémoire cache côté mémoire à mappage direct ;
un schéma d'entrelacement pour la mémoire cache côté mémoire à mappage direct ;
un schéma d'accès d'adresse de mémoire pour une application qui utilise des données stockées dans la mémoire cache côté mémoire à mappage direct ;
un identifiant d'application ou un identifiant de processus qui est associé à un niveau de priorité accru ;
des informations d'utilisation pour la mémoire cache côté mémoire à mappage direct ; ou
des informations de télémétrie en temps réel.

6. Dispositif pour allouer des pages physiques de mémoire, comprenant :
un allocateur de pages de système d'exploitation, OS (320 ; 430 ; 540) ; et
une interface de communication pour coupler l'allocateur de pages d'OS à une mémoire cache côté mémoire à mappage direct (330 ; 410 ; 520) et une unité de contrôle de cache côté mémoire (310 ; 420 ; 530) couplée à la mémoire cache côté mémoire à mappage direct ;
dans lequel l'allocateur de pages d'OS est configuré pour réaliser les étapes du procédé selon l'une quelconque des étapes 1 à 5.

7. Système de mémoire utilisable pour allouer des pages physiques de mémoire, comprenant :
une mémoire non volatile, NVM (510) ;
une mémoire cache côté mémoire à mappage direct (330 ; 520) couplée en communication à la NVM ;
une unité de contrôle de mémoire cache côté mémoire (310 ; 530) couplée en communication à la mémoire cache côté mémoire à mappage direct ; et
un allocateur de pages de système d'exploitation, OS (320 ; 540) configuré pour réaliser les étapes du procédé selon l'une quelconque des revendications 1 à 5.

8. Système selon la revendication 7, dans lequel l'allocateur de pages d'OS est en outre configuré pour ajuster la politique d'allocation de pages pour définir les pages physiques allouées dans un ou plusieurs de : la NVM ou la mémoire cache côté mémoire à mappage direct.

9. Système selon la revendication 7, dans lequel la NVM et la mémoire cache côté mémoire à mappage direct sont situées sur un même module de mémoire double en ligne, DIMM, dans le dispositif de mémoire.
